(19) Europäisches Patentamt / European Patent Office / Office européen des brevets

(11) **EP 4 746 432 A1**

(12) **EUROPEAN PATENT APPLICATION**
published in accordance with Art. 153(4) EPC

(43) Date of publication:
**20.05.2026 Bulletin 2026/21**

(21) Application number: **24842784.1**

(22) Date of filing: **15.04.2024**

(51) International Patent Classification (IPC):
***H04N 23/60*** (2023.01)

(52) Cooperative Patent Classification (CPC):
**H04N 23/81; H04N 17/002; H04N 23/58**

(86) International application number:
**PCT/JP2024/014926**

(87) International publication number:
**WO 2025/017984 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.07.2023 JP 2023116238**

(71) Applicant: **Panasonic Intellectual Property Management Co., Ltd.**
**Kadoma-shi, Osaka 571-0057 (JP)**

(72) Inventors:
• **YOSHIDA, Norikatsu**
**Kadoma-shi, Osaka 571-0057 (JP)**
• **NAKAI, Kensuke**
**Kadoma-shi, Osaka 571-0057 (JP)**
• **MOTODA, Kazumasa**
**Kadoma-shi, Osaka 571-0057 (JP)**
• **HIRATA, Yoichi**
**Kadoma-shi, Osaka 571-0057 (JP)**

(74) Representative: **Novagraaf International SA**
**Chemin de l'Echo 3**
**1213 Onex, Geneva (CH)**

(54) **IMAGE CAPTURE DEVICE, CORRECTION DEVICE, CORRECTION METHOD, AND COMPUTER PROGRAM**

(57)    Provided is an image capture device including an optical element and an arithmetic circuit and capable of changing an image capturing direction around at least two rotation axes. The optical element is disposed at a position away from an intersection of the at least two rotation axes. The arithmetic circuit captures a plurality of images in different image capturing directions, obtains a distance from a focal point of each image defined by the optical element to the intersection by using an image capturing direction when capturing each of the plurality of images, calculates an internal parameter of the image capture device using the distance, obtains a correction parameter based on the internal parameter, and corrects internal distortion of the image capture device using the correction parameter.

FIG. 2

EP 4 746 432 A1

# EP 4 746 432 A1

**Description**

TECHNICAL FIELD

The present disclosure relates to an image capture device, a correction device, a correction method, and a computer program, for correcting internal distortion of the image capture device.

BACKGROUND ART

An image captured by a camera such as an imaging device may be affected by internal distortion unique to the camera. On the other hand, camera calibration may be performed for the camera before capturing an image. As a camera cualibration method, there is a method of moving the camera and using a plurality of images obtained by photographing the same subject from different places (see, for example, PTL 1).

Citation List

Patent Literature

PTL 1: Unexamined Japanese Patent Publication No. 2009-17480

SUMMARY OF THE INVENTION

However, as described above, in a case where the images are captured by moving the camera for the camera calibration, the calibration requires many steps and time.

The present disclosure provides an image capture device, a correction device, a correction method, and a computer program capable of easily correcting the internal distortion of the image capture device.

The image capture device of the present disclosure is an image capture device including an optical element and an arithmetic circuit and capable of changing an image capturing direction around at least two rotation axes. The optical element is disposed at a position away from an intersection of the at least two rotation axes. The arithmetic circuit captures a plurality of images in different image capturing directions, obtains a distance from a focal point of each of the plurality of images defined by the optical element to the intersection by using an image capturing direction when capturing the image, calculates an internal parameter of the image capture device using the distance, obtains a correction parameter based on the internal parameter, and corrects internal distortion of the image capture device using the correction parameter.

These general and specific aspects may be implemented by a system, a method, a computer program, and any combination of these.

The image capture device, the correction device, the correction method, and the computer program of the present disclosure can easily correct the internal distortion of the image capture device.

BRIEF DESCRIPTION OF THE DRAWINGS

Fig. 1A is a schematic diagram illustrating epipolar geometry.
Fig. 1B is a schematic diagram illustrating epipolar geometry, following Fig. 1A.
Fig. 2 is a schematic diagram illustrating epipolar constraint.
Fig. 3 is a block diagram illustrating a configuration of an image capture device according to a first exemplary embodiment.
Fig. 4A is a schematic diagram illustrating a positional relationship between a pan rotation axis and a tilt rotation axis, and an imaging element.
Fig. 4B is a schematic diagram illustrating the positional relationship between the pan rotation axis and the tilt rotation axis, and the imaging element, following Fig. 4A.
Fig. 5A is a schematic diagram illustrating a distance from the pan rotation axis and the tilt rotation axis to the imaging element and an optical element.
Fig. 5B is a schematic diagram illustrating an example in which a pan angle is changed from a state of Fig. 5A.
Fig. 6A illustrates an example of an image captured by the image capture device.
Fig. 6B illustrates another example of the image captured by the image capture device.
Fig. 7A illustrates an example of extracting feature points from the image of Fig. 6A.
Fig. 7B illustrates an example of extracting the feature points from the image of Fig. 6B.

Fig. 8A illustrates a positional relationship of coordinates used for estimation of an internal parameter.

Fig. 8B illustrates, together with Fig. 8A, a positional relationship of the coordinates used for the estimation of the internal parameter.

Fig. 9A illustrates a positional relationship of coordinates used for specifying a measurable limit distance.

Fig. 9B illustrates, together with Fig. 9A, a positional relationship of the coordinates used for specifying the measurable limit distance.

Fig. 10 is a flowchart illustrating an example of processing executed by the image capture device.

Fig. 11 is a block diagram illustrating a configuration of a correction device and the image capture device to be connected according to a second exemplary embodiment.

## DESCRIPTION OF EMBODIMENTS

[Exemplary embodiments]

Hereinafter, exemplary embodiments of the present disclosure will be described with reference to the drawings. However, in detailed description, unnecessary parts in the description of the conventional technique and the substantially same configuration may be omitted. This is to simplify the description. In addition, the following description and the accompanying drawings are disclosed so that those skilled in the art can fully understand the present disclosure, and are not intended to limit the subject matter of the claims.

An image capture device, a correction device, a correction method, and a computer program according to the present disclosure correct internal distortion of the image capture device. In the following description, the "internal distortion" may be, for example, distortion generated in an image due to distortion of a lens of a camera. In general, the following formula (1) is known as a formula representing a captured image and spatial coordinates.

[Formula 1]

$$S \begin{bmatrix} u \\ v \\ 1 \end{bmatrix} = \begin{bmatrix} fx & 0 & Cx \\ 0 & fy & Cy \\ 0 & 0 & 1 \end{bmatrix} \begin{bmatrix} r11 & r12 & r13 & t1 \\ r21 & r22 & r23 & t2 \\ r31 & r32 & r33 & t3 \end{bmatrix} \begin{bmatrix} Xw \\ Yw \\ Zw \\ 1 \end{bmatrix} \quad \dots (1)$$

$\begin{bmatrix} u \\ v \\ 1 \end{bmatrix}$ : image coordinate point, $\begin{bmatrix} fx & 0 & Cx \\ 0 & fy & Cy \\ 0 & 0 & 1 \end{bmatrix}$ : internal parameter, $\begin{bmatrix} r11 & r12 & r13 & t1 \\ r21 & r22 & r23 & t2 \\ r31 & r32 & r33 & t3 \end{bmatrix}$ : external

parameter, $\begin{bmatrix} Xw \\ Yw \\ Zw \\ 1 \end{bmatrix}$ : world coordinate point

In the image capture device, the correction device, the correction method, and the computer program according to the present disclosure, the external parameter and the internal parameter are obtained from the image coordinate point and the world coordinate point using the above formula (1). Here, the "world coordinate point" indicates an arbitrary point captured by the image capture device in a space where the image capture device exists. The "image coordinate point" is a coordinate on the image of the arbitrary point captured by the image capture device. The "internal parameter" is a parameter due to a lens or the like of the image capture device. Further, the "external parameter" is a parameter for specifying a position or the like of the image capture device. The image capture device, the correction device, the correction method, and the computer program according to the present disclosure correct the internal distortion using the obtained internal parameter.

The image capture device, the correction device, the correction method, and the computer program according to the present disclosure use epipolar geometry used in a technology of photogrammetry in correcting the internal distortion. Specifically, the image capture device, the correction device, the correction method, and the computer program according to the present disclosure can analyze an image including a target point captured by cameras at a plurality of different positions and obtain three-dimensional coordinates such as the target point and an imaging position. First, the epipolar geometry will be briefly described.

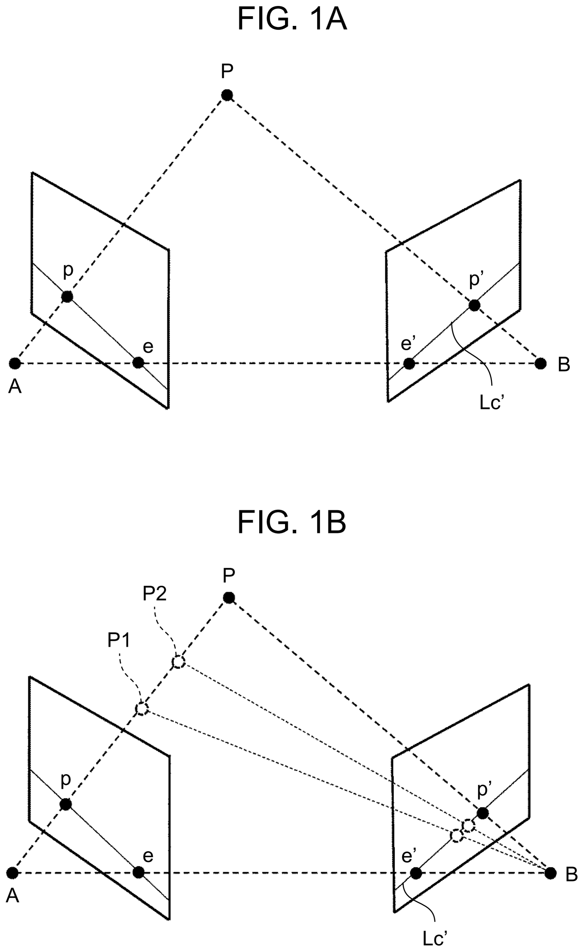

The "epipolar geometry" is geometry used in a computer vision field, which involves capturing an image of three-dimensional space using cameras at different positions. Fig. 1A illustrates an example in which two cameras existing at different positions capture target point P. In Fig. 1A, coordinates of optical centers of the two cameras are respectively indicated by A and B. In the following description, a camera having coordinate A as the optical center is referred to as a first camera, and a camera having coordinate B as the optical center is referred to as a second camera. Target point P can take an arbitrary coordinate in the space. However, target point P and coordinates A and B exist on the same plane. In the epipolar geometry, a plane represented by target point P and coordinates A and B is referred to as an "epipolar plane". Further, a line at which the epipolar plane intersects each of image planes is referred to as an "epipolar line". Furthermore, when the same target point P is captured by the first and second cameras, the target point being on each other's epipolar line on the image plane is referred to as "epipolar constraint". As illustrated in Fig. 1B, therefore, at a time point when only that "target point P is shown at point p on the image plane when viewed from coordinate A of the first camera" is known, it is not clear where target point P is located among coordinates P, P1, and P2. Using the epipolar constraint, it is possible to specify that target point P is at a position of coordinate P when it is found that "the same target point P is shown at point p' on an image plane as viewed from coordinate B of the second camera".

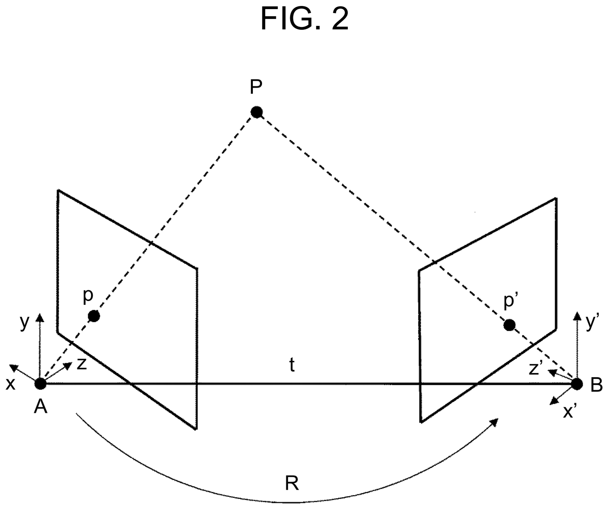

As illustrated in Fig. 2, from concept of the epipolar constraint and triangulation, a geometric relationship between feature points p and p' corresponding to target point P in images captured by the first camera and the second camera is defined as basic matrix F.

Formula (2.1) is established from epipolar constraint condition.

$$p'^{T}Ep=0...(2.1)$$

Here, T represents a transposed matrix, and E represents a basic matrix (rotation component R and parallel movement component t) representing the epipolar constraint between corresponding feature points.

Further, the internal parameter of the first camera is referred to as K, and the internal parameter of the second camera is referred to as K'. At this time, when the coordinate on the image plane of the first camera is m and the coordinate on the image plane of the second camera is m', m = Kp and m' = K'p' can be expressed.

When the above formula (2.1) is expressed by coordinates on the image,

$m'^{T}K'^{-T}Em'^{T}K^{-1}m = 0$ and $m'^{T}Fm = 0$ are satisfied. Therefore, basic matrix F is expressed by Formula (2.2).

$$F=K'^{-T}EK^{-1}...(2.2)$$

Further, when the rotation component is R and the parallel movement component is t, basic matrix F is expressed by Formula (2.3).

$$F=K'^{-T}tRK^{-1}...(2.3)$$

K, t, and R are unknown. Therefore, K, t, and R are estimated by obtaining basic matrix F or basic matrix E using a plurality of images.

In order to obtain basic matrix F, for example, an eight-point algorithm is used. The eight-point algorithm is a method of estimating basic matrix F using eight or more corresponding points. In the eight-point algorithm, basic matrix F is estimated by the least squares method from eight or more corresponding points using SVD. In the eight-point algorithm, basic matrix E can be obtained based on the internal parameter using estimated basic matrix F.

In order to obtain basic matrix E, for example, a five-point algorithm is also used. The five-point algorithm is a method of directly estimating basic matrix E using five or more corresponding points.

In the epipolar geometry, external parameters indicating position, orientation, and the like between the cameras can be obtained by using basic matrix E obtained as described above.

[First exemplary embodiment]

<Image capture device>

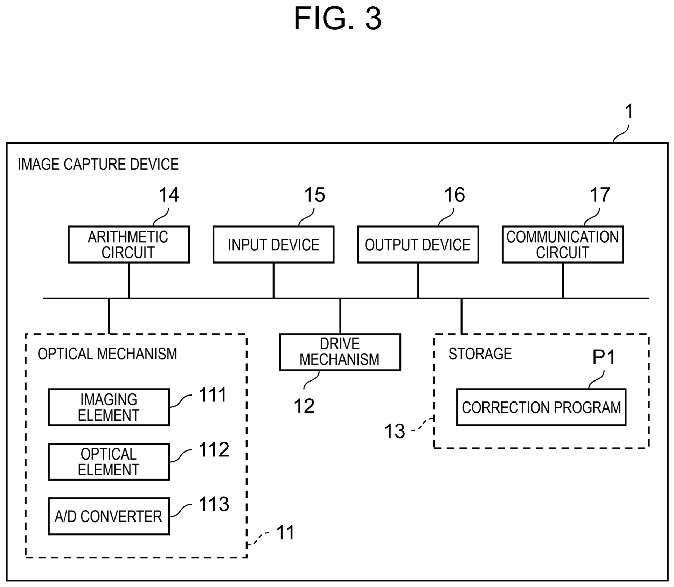

As illustrated in Fig. 3, image capture device 1 according to a first exemplary embodiment is a camera with an electric pan head capable of changing a horizontal direction, a vertical direction, and a zoom. The camera with the electric pan head is also called a pan-tilt camera. For example, as illustrated in Fig. 3, image capture device 1 includes optical mechanism 11, drive mechanism 12, storage 13, and arithmetic circuit 14. Further, image capture device 1 may include input device 15, output device 16, and communication circuit 17. Hereinafter, an example in which image capture device 1 can drive a pan angle and a tilt angle but installation position is not changed will be described. Therefore, in the present disclosure, a description will be given on an assumption that the pan angle and the tilt angle of image capture device 1 are changed but the position of image capture device 1 itself is not changed. Further, the camera with the electric pan head may perform roll control in addition to pan control and tilt control. However, in the following description, in order to simplify the description, an example in which roll is not changed will be described.

Optical mechanism 11 includes a series of mechanisms associated with image capturing. Optical mechanism 11 acquires an image under control of arithmetic circuit 14. Specifically, optical mechanism 11 includes imaging element 111, optical element 112, A/D converter 113, and the like.

Drive mechanism 12 drives optical mechanism 11. Drive mechanism 12 drives image capture device 1 itself. Thus, drive mechanism 12 controls pan, tilt, and zoom.

Storage 13 is a recording medium that records various kinds of information. Storage 13 is implemented by, for example, a RAM, a ROM, a flash memory, a solid state device (SSD), a hard disk drive, other storage devices, or an appropriate combination thereof. Storage 13 stores various data and the like obtained by imaging and correction processing in image capture device 1. In addition, storage 13 stores correction program P1.

Arithmetic circuit 14 is a controller that controls entire image capture device 1. For example, arithmetic circuit 14 reads and executes correction program P1 stored in storage 13. Thus, image capture device 1 achieves various types of processing related to correction of the internal parameter. Arithmetic circuit 14 may be various processors such as a CPU, an MPU, a GPU, an FPGA, a DSP, and an ASIC, or may be a dedicated hardware circuit.

Input device 15 can be an operation button, a touch panel, a microphone, or the like used for operation or data input. Output device 16 can be a display, a speaker, a lamp, or the like used for outputting a processing result or data.

When image capture device 1 is connected to an external device, communication circuit 17 performs data communication with the external device. The data communication is performed in a wired and/or wireless manner, for example, according to a known communication standard. For example, wired data communication may be performed by using, as communication circuit 17, a communication controller of a semiconductor integrated circuit that operates in accordance with the Ethernet (registered trademark) standard and/or the USB (registered trademark) standard. In addition, wireless data communication may be performed by using, as communication circuit 17, a communication controller of a semiconductor integrated circuit that operates in accordance with IEEE802.11 standard related to a wireless local area network (LAN) and/or so-called 4G/5G/6G fourth/fifth/sixth generation mobile communication systems and the like for mobile communication.

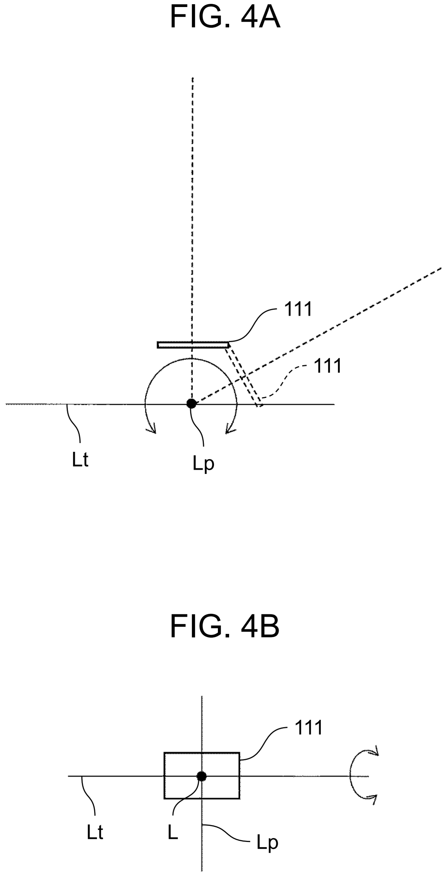

A relationship between imaging element 111 and pan rotation axis Lp and tilt rotation axis Lt will be described with reference to Figs. 4A and 4B. Fig. 4A illustrates a relationship between pan rotation axis Lp and tilt rotation axis Lt when imaging element 111 is viewed from above. Fig. 4B illustrates a relationship between pan rotation axis Lp and tilt rotation axis Lt when imaging element 111 is viewed from front. Drive mechanism 12 rotates image capture device 1 about pan rotation axis Lp in accordance with a control signal of the pan control. In addition, drive mechanism 12 rotates image capture device 1 about tilt rotation axis Lt in accordance with a control signal of the tilt control. As illustrated in Figs. 4A and 4B, pan rotation axis Lp intersects tilt rotation axis Lt. In an example illustrated in Figs. 4A and 4B, intersection L of pan rotation axis Lp and tilt rotation axis Lt is located at a position perpendicular to a center of imaging element 111. However, position of intersection L is not limited to the position perpendicular to the center of imaging element 111.

Note that as described above, although the roll control is omitted in the present exemplary embodiment, in a case where there is a roll axis, parallax occurs depending on the position, and the processing is complicated. Specifically, when the roll axis passes through a focal point and an image center of imaging element 111, that is, when the roll axis exists such that a perpendicular to imaging element 111 intersects the focal point, the parallax is not generated by the roll axis. On the other hand, when the roll axis deviates from the focal point or does not pass through an image center of an imaging surface, the parallax is generated by the roll axis.

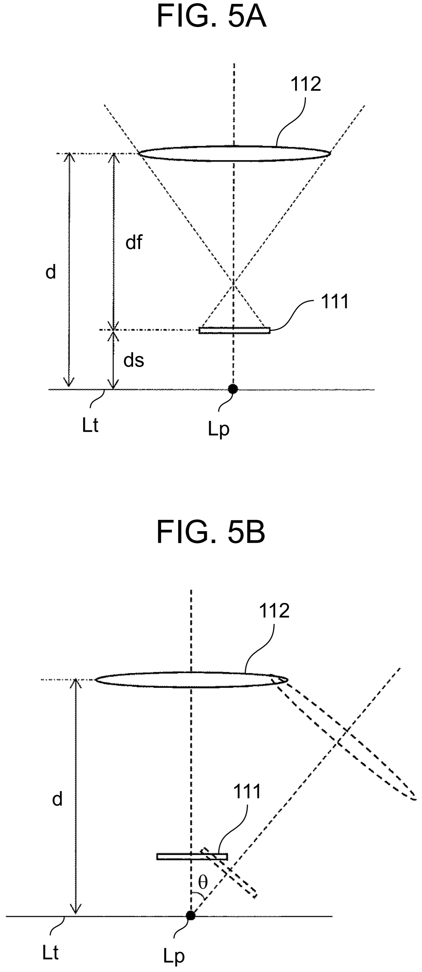

With reference to Fig. 5A, a relationship between the lens that is optical element 112, imaging element 111, pan rotation axis Lp, and tilt rotation axis Lt will be described. Similarly to Fig. 4A, Fig. 5A illustrates a relationship between imaging element 111, optical element 112, pan rotation axis Lp, and tilt rotation axis Lt as viewed from above. As illustrated in Fig. 5A, predetermined offset distance ds is provided between imaging element 111 and pan rotation axis Lp. Further, in Fig. 5A, a distance from a position of optical element 112 to imaging element 111 is referred to as focal length df. As illustrated in Fig. 5A, distance d from optical element 112 to pan rotation axis Lp is obtained by sum of offset distance ds and focal length df. Fig. 5B illustrates an example in which the pan angle is changed by $\theta$ from a state of Fig. 5A. As illustrated in Fig. 5B, even if the pan angle is changed, distance d from optical element 112 to pan rotation axis Lp and tilt rotation axis Lt is not changed. Similarly, even if the tilt angle is changed, distance d from optical element 112 to pan rotation axis Lp and tilt rotation axis Lt is not changed. In image capture device 1, presence of this offset distance ds is used to correct the internal distortion. Specifically, image capture device 1 uses a plurality of images captured by changing only the pan angle and/or the tilt angle for correcting the internal distortion. Therefore, in image capture device 1, it is not necessary to move the position of image capture device 1 to correct the internal distortion.

Hereinafter, processing executed in arithmetic circuit 14 in relation to correction of the internal distortion will be described.

(Pan-tilt control)

Arithmetic circuit 14 generates a pan-tilt control signal for executing pan-tilt control in order to capture an image for correcting the internal distortion. Arithmetic circuit 14 outputs a generated pan-tilt control signal to drive mechanism 12. In addition, arithmetic circuit 14 generates an imaging control signal for performing imaging. Arithmetic circuit 14 outputs a generated imaging control signal to optical mechanism 11. Here, arithmetic circuit 14 generates the pan-tilt control signal for driving to a plurality of different pan angles and tilt angles. For example, storage 13 may store combinations of the plurality of different pan angles and tilt angles in advance as data for calibration. The plurality of different pan angles and tilt angles are set within a range in which the same subject is included in at least a part of a captured image.

(Image capturing)

When the pan angle and/or the tilt angle is changed, arithmetic circuit 14 transmits the control signal to optical mechanism 11 and captures the image. In addition, arithmetic circuit 14 stores image data obtained at each pan angle and tilt angle in storage 13. Here, arithmetic circuit 14 stores the pan angle and the tilt angle at a timing when each piece of the image data is captured in storage 13 as pan-tilt data.

(Extraction of feature point and description of feature amount)

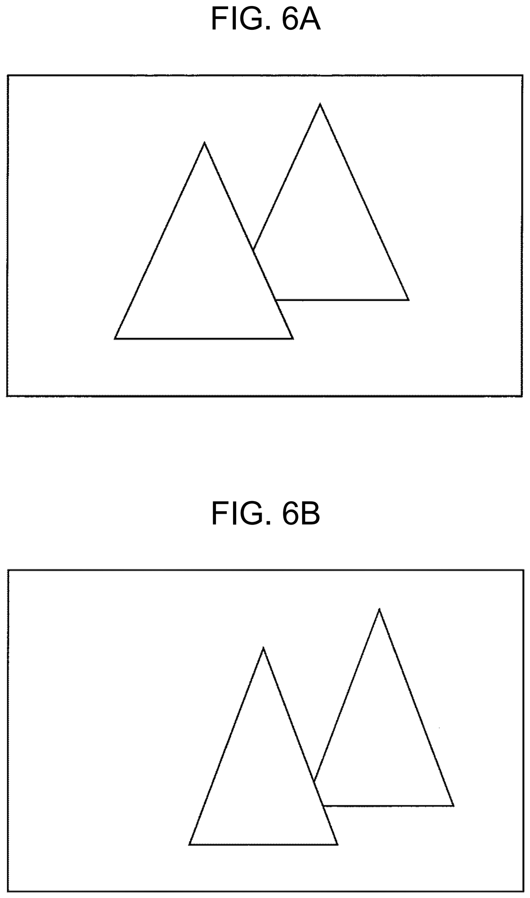

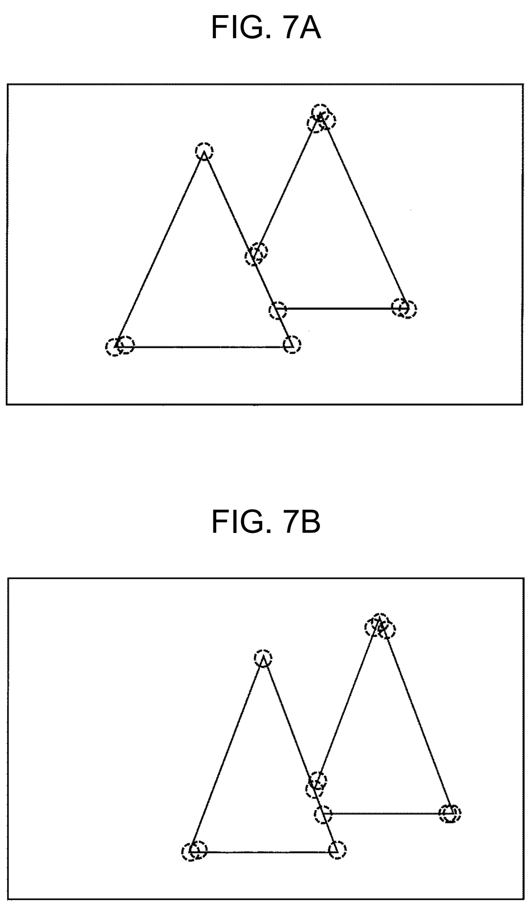

Arithmetic circuit 14 extracts the feature points of the image from each acquired image and obtains a feature amount for each feature point. For example, arithmetic circuit 14 can extract the feature point and describe the feature amount from each image using a generally used scale invariant feature transform (SIFT) algorithm. Further, for example, arithmetic circuit 14 may use an algorithm of speeded up robust features (SURF) or oriented FAST and rotated BRIEF (ORB) to extract and describe the feature points. It is assumed that image capture device 1 acquires two images illustrated in Figs. 6A and 6B at different pan angles and tilt angles. Arithmetic circuit 14 extracts the feature points from the image illustrated in Fig. 6A as illustrated in Fig. 7A. Further, arithmetic circuit 14 extracts the feature points from the image illustrated in Fig. 6B as illustrated in Fig. 7B. In examples of Figs. 7A and 7B, a plurality of extracted feature points are indicated by circular broken lines. Note that Figs. 7A and 7B illustrate simplified examples in which 12 feature points are extracted. However, the number of feature points actually extracted from the image is more than 12.

(Feature point matching)

Arithmetic circuit 14 performs feature point matching between different images after detecting the feature points and describing feature amounts. Arithmetic circuit 14 can use various existing algorithms for feature point matching. For example, arithmetic circuit 14 can use accelerated KAZE (A-KAZE), K nearest neighbors (KNN), Brute-Force matcher, or the like for the feature point matching. At this time, arithmetic circuit 14 generates combinations (image pairs) of all two images from the plurality of images. Further, arithmetic circuit 14 performs the feature point matching by setting points having close feature amounts as the same point for all combinations of the two images. Arithmetic circuit 14 generates matching lists as a result of performing the feature point matching. The matching list is a list indicating association of corresponding feature points between the two images.

(Exclusion of outlier)

Arithmetic circuit 14 removes false matching from each matching list obtained by the feature point matching. For detecting the false matching, for example, the epipolar geometry is used, and a RANSAC method is used. Arithmetic circuit 14 selects a combination of images with the highest matching degree using a plurality of matching lists from which an outlier has been removed.

(Internal parameter estimation)

Arithmetic circuit 14 estimates the position of image capture device 1 in a state of capturing each image using the combination of the images with the highest matching degree. Here, the two images are captured by image capture device 1 having a fixed position. However, image capture device 1 captures the images at different pan angles and tilt angles. Therefore, arithmetic circuit 14 estimates the internal parameter using a coordinate relationship of parts set in image capture device 1 and the pan angle and the tilt angle when each image is captured.

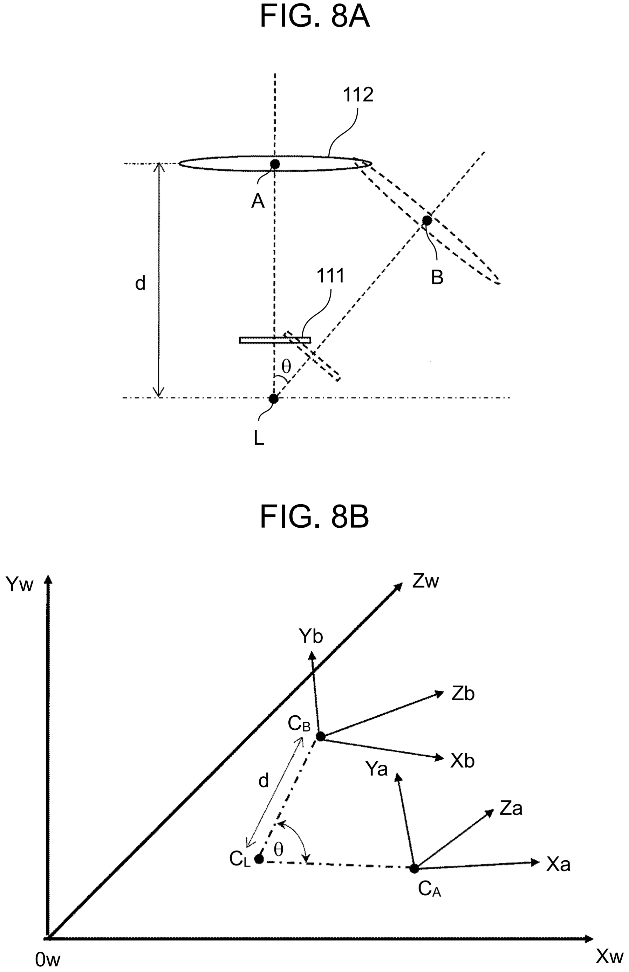

Here, as illustrated in Fig. 8A, a focal point serving as a starting point of image capture device 1 is A, and a focal point after panning and/or tilting is B. The intersection of pan rotation axis Lp and tilt rotation axis Lt is referred to as L. Fig. 8B illustrates a relationship in Fig. 8A in more detail. As illustrated in Fig. 8B, coordinates of focal points A and B and intersection L in a world coordinate system (Xw, Yw, Zw) are respectively referred to as $C_A$, $C_B$, and $C_L$. In addition, a distance between intersection L and coordinates $C_A$ and $C_B$ is referred to as d, and rotation angle is referred to as θ. Note that distance d is a distance in the world coordinate system.

[Formula 2]

World coordinates: (Xw, Yw, Zw), Distance between point L and $C_A$, $C_B$: d, Angle formed by $C_A$, $C_B$, and $C_L$: θ

Focus A coordinate: $C_A = \begin{pmatrix} x_a \\ y_a \\ z_a \end{pmatrix}$, Focus B coordinate: $C_B = \begin{pmatrix} x_b \\ y_b \\ z_b \end{pmatrix}$,

Intersection L coordinate: $C_L = \begin{pmatrix} x_l \\ y_l \\ z_l \end{pmatrix}$

These values can be specified using a coordinate relationship known in design of image capture device 1, and the pan angle and the tilt angle when each image is captured.

The distance between $C_A$ and $C_L$, and $C_B$ and $C_L$ is expressed by Formula (3.1) from d.

$$|C_A\text{-}C_L|\text{-}|C_B\text{-}C_L|=d...(3.1)$$

Since rotation is centered on $C_L$, a formula indicating a relationship when $C_A$ and $C_B$ are moved in parallel to $C_L$ position and rotated by θ is expressed by Formula (3.2) using rotation matrix $R_L$.

$$C_B\text{-}C_L=R_L(C_A\text{-}C_L)$$

$$C_B=R_L(C_A\text{-}C_L)+C_L...(3.2)$$

Here, when a unit vector in a rotation axis direction is n = ($n_1$, $n_2$, $n_3$), rotation matrix $R_L$ is expressed by the following formula (3.3).

[Formula 3]

$$R_L = \begin{pmatrix} n_1{}^2(1-\cos\theta) + \cos\theta & n_1 n_2(1-\cos\theta) - n_3\sin\theta & n_1 n_3(1-\cos\theta) - n_2\sin\theta \\ n_1 n_2(1-\cos\theta) + n_3\sin\theta & n_2{}^2(1-\cos\theta) + \cos\theta & n_2 n_3(1-\cos\theta) - n_1\sin\theta \\ n_1 n_3(1-\cos\theta) - n_2\sin\theta & n_2 n_3(1-\cos\theta) - n_1\sin\theta & n_3{}^2(1-\cos\theta) + \cos\theta \end{pmatrix}$$

$$... (3.3)$$

For example, in the case of rotating around a Yw axis, n = (0, 1, 0). The rotation direction is a right screw direction, that is, a direction from an Xw axis toward a Zw axis is referred to as a forward rotation direction. Arithmetic circuit 14 adds constraints of Formulas (3.1) and (3.2) to Formula (2.3) described above for the epipolar constraint to obtain internal parameter K. Specifically, arithmetic circuit 14 obtains internal parameter K by solving simultaneous equations of a plurality of the plurality of feature points using the epipolar constraint that is established for the feature points in the two images. Thus, calculation accuracy of internal parameter K can be improved.

(Calculation of correction parameter)

When internal parameter K is estimated, arithmetic circuit 14 generates a correction parameter for correcting the internal distortion using estimated internal parameter K. In addition, arithmetic circuit 14 uses the generated correction parameter for correcting the internal distortion. For example, obtained internal parameter K should be the same at any coordinate point of the image, but the internal parameter may be different for each coordinate due to the internal distortion.

Arithmetic circuit 14 generates the correction parameter for correcting variation in internal parameter K for each coordinate point.

As described above, in image capture device 1, for calibration, the position of image capture device 1 itself is fixed, and only the pan angle and/or the tilt angle are changed to capture the plurality of images. At this time, pan rotation axis Lp and tilt rotation axis Lt have offset distance ds with the imaging element. Thus, image capture device 1 can apply the epipolar constraint to obtain internal parameter K without changing the position of image capture device 1 itself.

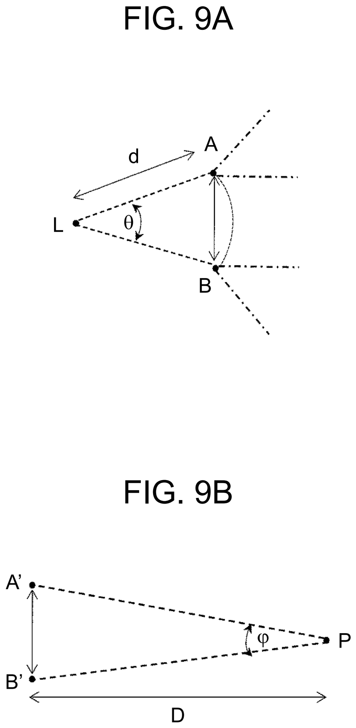

Here, conditions of distance d and angle θ will be described with reference to Figs. 9A and 9B. As described above, distance d is a distance between focal point A and intersection L of pan rotation axis Lp and tilt rotation axis Lt. Angle θ is the rotation angle of the pan angle and the tilt angle. In Fig. 9A, an optical axis entering each of focal points A and B is indicated by a one-dot chain line. In an example illustrated in Fig. 9A, a distance between focal points A and B corresponds to the parallax. This distance is expressed by the following formula (4.1).

[Formula 4]

$$\overline{AB} = 2d\sin\frac{\theta}{2} \quad ... (4.1)$$

When angle θ is fixed, the distance between points A and B increases as distance d increases.

Distance d and angle θ have many related parameters. Therefore, the conditions of distance d and angle θ are determined using measurable limit distance D illustrated in Fig. 9B. Fig. 9B illustrates a relationship between the parallax and target point P necessary for surveying measurable limit distance D. In Fig. 9B, a distance between points A' and B' indicates the parallax required to measure measurable limit distance D. A distance between parallaxes indicated by point A' and point B' is expressed by the following formula (4.2).

[Formula 5]

$$\overline{A'B'} = 2D\tan\frac{\varphi}{2} \quad ... (4.2)$$

Typically, a ratio between the distance between points A' and B' and measurable limit distance D is constant. Therefore, in order to see farther, it is necessary to increase the distance between points A' and B'. However, in image capture device 1, since distance d is fixed and has a small value, there is a limit to a range in which values of points A and B can be increased even if angle θ is changed. Therefore, if distance d is large, the position can be measured farther.

That is, since actual parallax needs to be larger than the distance between the parallaxes of point A' and point B', measurable limit distance D satisfies the following relational formula (4.3).

[Formula 6]

$$\overline{AB} \geq \overline{A'B'}$$

$$2d\sin\frac{\theta}{2} \geq 2D\tan\frac{\varphi}{2}$$

$$d\sin\frac{\theta}{2} \geq D\tan\frac{\varphi}{2} \quad ... (4.3)$$

Therefore, when it is desired to survey a distance equal to or more than measurable limit distance D, it is necessary to satisfy the formula (4.3).

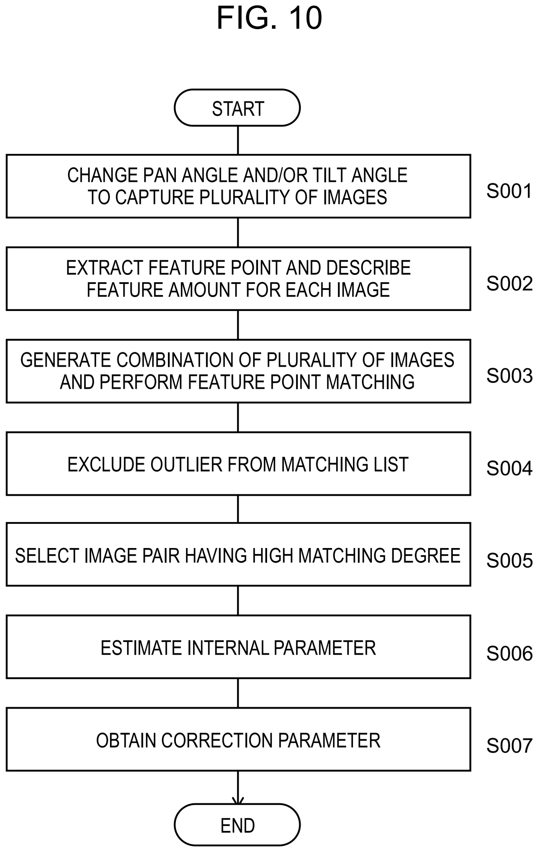

A flow of processing in the correction device will be described with reference to a flowchart illustrated in Fig. 10. Since specific processing of individual steps of the flowchart has been described above, each step will be described in a simplified manner.

Arithmetic circuit 14 captures the plurality of images by changing the pan angle and/or the tilt angle (S001).

Arithmetic circuit 14 extracts the feature point and describes the feature amount for each image obtained in step S001 (S002).

Arithmetic circuit 14 performs the feature point matching using the feature amounts of the plurality of feature points of each image obtained in step S002 (S003). At this time, arithmetic circuit 14 generates combinations of the plurality of images and performs the feature point matching for each combination. As a result of the feature point matching, arithmetic circuit 14 generates the matching list.

Arithmetic circuit 14 excludes the outlier using the matching list generated in step S003 (S004).

Arithmetic circuit 14 selects an image pair having a high matching degree using the feature point from which the outlier is excluded in step S004 (S005).

Arithmetic circuit 14 obtains the internal parameter using the selected image pair (S006).

Arithmetic circuit 14 obtains the correction parameter using the internal parameter obtained in step S006 (S007).

As described above, image capture device 1 according to the first exemplary embodiment captures the plurality of images by changing only the pan angle and/or the tilt angle without changing the position of image capture device 1 itself. In addition, image capture device 1 obtains the correction parameter using the plurality of images and corrects the internal distortion.

[Second exemplary embodiment]

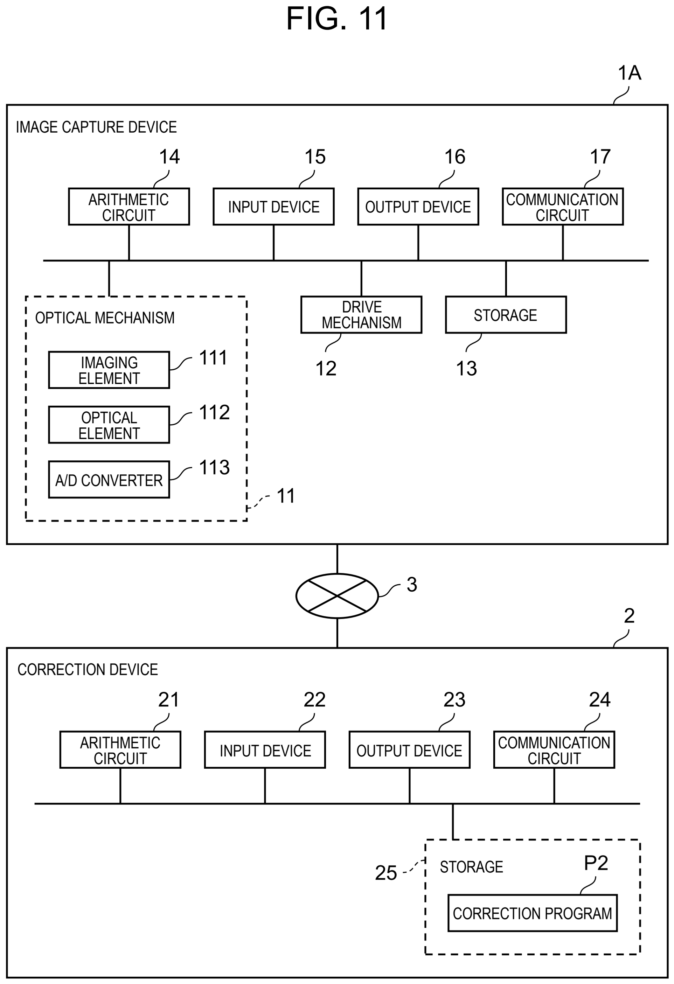

Correction device 2 according to a second exemplary embodiment will be described with reference to Fig. 11. Image capture device 1 according to the first embodiment described above with reference to Fig. 3 obtains the correction parameter, to correct the internal distortion. Correction device 2 according to the second embodiment is connected to image capture device 1A via network 3. Correction device 2 obtains the correction parameter by using images captured at the plurality of different pan angles and tilt angles from image capture device 1A. Image capture device 1A corrects the internal distortion using the correction parameter obtained by correction device 2.

<Image capture device>

As illustrated in Fig. 11, image capture device 1A includes optical mechanism 11, drive mechanism 12, storage 13, arithmetic circuit 14, input device 15, output device 16, and communication circuit 17. Storage 13 of image capture device 1A does not need to store correction program P1. Arithmetic circuit 14 controls the pan angle and the tilt angle in accordance with the control signal received from correction device 2 via communication circuit 17. Arithmetic circuit 14 captures the image in accordance with the control signal received from correction device 2 via communication circuit 17. Arithmetic circuit 14 transmits the plurality of images captured at different pan angles and tilt angles, and the pan angles and the tilt angles when the images are captured to correction device 2 via communication circuit 17. Furthermore, arithmetic circuit 14 receives the correction parameter via communication circuit 17. Arithmetic circuit 14 corrects the internal distortion using the received correction parameter.

<Correction device>

As illustrated in Fig. 11, correction device 2 is an information processing device such as a personal computer including arithmetic circuit 21, input device 22, output device 23, communication circuit 24, and storage 25. Arithmetic circuit 21, output device 23, communication circuit 24, and storage 25 are the same as arithmetic circuit 14, output device 16, communication circuit 17, and storage 13 of image capture device 1 described above with reference to Fig. 3. Input device 22 can be a keyboard or a mouse in addition to the operation button, the touch panel, the microphone, or the like.

Arithmetic circuit 21 reads and executes correction program P2 stored in storage 25 to execute processing such as pan-tilt control, image capturing control, feature amount extraction and feature amount description, feature matching, outlier exclusion, internal parameter estimation, and correction parameter calculation. Since each processing is similar to the processing executed by arithmetic circuit 14 of image capture device 1 according to the first embodiment, a detailed description thereof will be omitted.

(Pan-tilt control and image capturing)

Arithmetic circuit 21 generates the pan-tilt control signal for executing the pan-tilt control. Arithmetic circuit 21 transmits the generated pan-tilt control signal to image capture device 1 via communication circuit 24. In addition, arithmetic circuit 21 generates the imaging control signal for performing imaging. Arithmetic circuit 21 transmits the generated imaging control signal to image capture device 1 via communication circuit 24. When receiving the image data obtained at each pan angle and tilt angle, the arithmetic circuit 21 stores the image data in storage 13. In addition, arithmetic circuit 21 receives the pan-tilt data indicating the pan angle and the tilt angle at the timing when each piece of the image data is captured, and stores the pan-tilt data in storage 13.

(Extraction of feature point and description of feature amount)

Arithmetic circuit 21 extracts the feature points of the image from each acquired image and obtains the feature amount for each feature point.

(Feature point matching)

Arithmetic circuit 21 performs the feature point matching between different images after detecting the feature points and describing the feature amounts.

(Exclusion of outlier)

Arithmetic circuit 21 removes the false matching from each matching list obtained by the feature point matching. In addition, arithmetic circuit 21 selects the combination of the images with the highest matching degree using the plurality of matching lists from which the outlier has been removed.

(Internal parameter estimation)

Arithmetic circuit 21 estimates the position of image capture device 1 in the state of capturing each image using the combination of the images with the highest matching degree. In addition, arithmetic circuit 21 estimates the internal parameter of image capture device 1 using the estimation result.

(Calculation of correction parameter)

Arithmetic circuit 21 generates the correction parameter for correcting the internal distortion using the estimated internal parameter. In addition, arithmetic circuit 21 transmits the generated correction parameter to image capture device 1A via communication circuit 24.

As described above, correction device 2 according to the second exemplary embodiment can calibrate the image capture device 1A to be connected. At this time, the plurality of images captured by changing only the pan angle and/or the tilt angle without changing the position of the image capture device 1A itself are transmitted to correction device 2. In addition, correction device 2 generates the correction parameter for correcting the internal distortion using a plurality of received images.

<<Overview of exemplary embodiments>>

(1) The image capture device of the present disclosure is an image capture device including an optical element and an arithmetic circuit and changing an image capturing direction around at least two rotation axes, in which

the optical element is disposed at a position away from an intersection of the at least two rotation axes, and the arithmetic circuit
may capture a plurality of images in different image capturing directions,
obtain a distance from a focal point of each image defined by the optical element to the intersection by using an image capturing direction when capturing each of the plurality of images,
calculate an internal parameter of the image capture device using the distance,
obtain a correction parameter based on the internal parameter, and
correct internal distortion of the image capture device using the correction parameter.

Thus, the internal distortion can be corrected without moving the image capture device itself.

(2) The correction device of the present disclosure is a correction device including an arithmetic circuit and correcting internal distortion of an image capture device that changes an image capturing direction around at least two rotation axes, in which

an optical element of the image capture device is disposed at a position away from an intersection of the at least two rotation axes, and
the arithmetic circuit
may acquire, from the image capture device, a plurality of images captured in different image capturing directions,

obtain a distance from a focal point of each image defined by the optical element to the intersection by using an image capturing direction when capturing each of the plurality of images,
calculate an internal parameter of the image capture device using the distance,
obtain a correction parameter based on the internal parameter, and
output the correction parameter to the image capture device.

Thus, the internal distortion can be corrected without moving the image capture device itself.

(3) The correction method of the present disclosure is a correction method performed by a correction device that corrects internal distortion of an image capture device that changes an image capturing direction around at least two rotation axes, in which

an optical element of the image capture device is disposed at a position away from an intersection of the at least two rotation axes,
the correction device includes an arithmetic circuit, and
the correction method may include:

in the arithmetic circuit,
acquiring, from the image capture device, a plurality of images captured in different image capturing directions;
obtaining a distance from a focal point of each image defined by the optical element to the intersection by using an image capturing direction when capturing each of the plurality of images;
calculating an internal parameter of the image capture device using the distance;
obtaining a correction parameter based on the internal parameter; and
outputting the correction parameter to the image capture device.

Thus, the internal distortion can be corrected without moving the image capture device itself.

(4) In the correction method of (3), in the arithmetic circuit,
the plurality of images are an image pair including two images and are each of a plurality of the image pairs, and the correction method may include:

detecting a feature point at each of the plurality of image pairs; and
calculating the internal parameter using the image pair having a high matching degree selected using the feature point.

Thus, the internal distortion can be corrected with high accuracy using two images having a high matching degree.

(5) In the correction method of (3) or (4), the arithmetic circuit may use epipolar constraint to calculate the internal parameter.

Thus, the internal distortion can be corrected with high accuracy using the two images.

(6) The computer program of the present disclosure is a computer program executed by the correction device including the arithmetic circuit and correcting the internal distortion of the image capture device capable of changing the image capturing direction around the rotation axis, and may cause the information processing device to perform the correction method according to any one of (3) to (5).

Thus, the internal distortion can be corrected without moving the image capture device itself.

An image capture system, a control method, and a computer program according to any one of claims of the present disclosure are implemented by cooperation with hardware resources, for example, a processor, a memory, and a computer program.

INDUSTRIAL APPLICABILITY

The image capture device, the correction device, the correction method, and the computer program of the present disclosure are useful for calibrating the internal distortion of the image capture device.

REFERENCE MARKS IN THE DRAWINGS

1, 1A: image capture device
2: correction device

11: optical mechanism
111: imaging element
112: optical element
113: A/D converter
12: drive mechanism
13, 25: storage
14, 21: arithmetic circuit
15, 22: input device
16, 23: output device
17, 24: communication circuit
d: distance
ds: offset distance
df: focal length
K: internal parameter
L: intersection
Lp: pan rotation axis
Lt: tilt rotation axis
P1, P2: correction program

**Claims**

1. An image capture device that changes an image capturing direction around at least two rotation axes, the image capture device comprising an optical element and an arithmetic circuit,
   wherein

   the optical element is disposed at a position away from an intersection of the at least two rotation axes, and
   the arithmetic circuit
   captures a plurality of images in different image capturing directions,
   obtains a distance from a focal point of each of the plurality of images to the intersection by using an image capturing direction when capturing the image, the focal point being defined by the optical element,
   calculates an internal parameter of the image capture device using the distance,
   obtains a correction parameter based on the internal parameter, and
   corrects internal distortion of the image capture device using the correction parameter.

2. A correction device comprising an arithmetic circuit and correcting internal distortion of an image capture device that changes an image capturing direction around at least two rotation axes, wherein

   an optical element of the image capture device is disposed at a position away from an intersection of the at least two rotation axes, and
   the arithmetic circuit
   acquires, from the image capture device, a plurality of images captured in different image capturing directions,
   obtains a distance from a focal point of each of the plurality of images to the intersection by using an image capturing direction when capturing the image, the focal point being defined by the optical element,
   calculates an internal parameter of the image capture device using the distance,
   obtains a correction parameter based on the internal parameter, and
   outputs the correction parameter to the image capture device.

3. A correction method performed by a correction device that corrects internal distortion of an image capture device that changes an image capturing direction around at least two rotation axes, wherein

   an optical element of the image capture device is disposed at a position away from an intersection of the at least two rotation axes, and
   the correction device includes an arithmetic circuit, the correction method comprising:

   in the arithmetic circuit,
   acquiring, from the image capture device, a plurality of images captured in different image capturing directions;

obtaining a distance from a focal point of each of the plurality of images to the intersection by using an image capturing direction when capturing the image, the focal point being defined by the optical element;
calculating an internal parameter of the image capture device using the distance;
obtaining a correction parameter based on the internal parameter; and
outputting the correction parameter to the image capture device.

4. The correction method according to claim 3, wherein

in the arithmetic circuit,
the plurality of images are an image pair including two images and are each of a plurality of the image pairs, the correction method comprising:

detecting a feature point at each of the plurality of image pairs; and
calculating the internal parameter using the image pair having a high matching degree selected using the feature point.

5. The correction method according to claim 3, comprising using epipolar constraint to calculate the internal parameter in the arithmetic circuit.

6. A computer program causing the correction device to perform the correction method according to any one of claims 3 to 5.

# FIG. 1A

# FIG. 1B

# FIG. 2

# FIG. 3

IMAGE CAPTURE DEVICE — 1

| 14 | 15 | 16 | 17 |
|---|---|---|---|
| ARITHMETIC CIRCUIT | INPUT DEVICE | OUTPUT DEVICE | COMMUNICATION CIRCUIT |

OPTICAL MECHANISM

IMAGING ELEMENT — 111

OPTICAL ELEMENT — 112

A/D CONVERTER — 113

— 11

DRIVE MECHANISM

12

STORAGE — 13

P1

CORRECTION PROGRAM

# FIG. 4A

# FIG. 4B

# FIG. 5A

# FIG. 5B

# FIG. 6A

# FIG. 6B

# FIG. 7A

# FIG. 7B

# FIG. 8A

# FIG. 8B

# FIG. 9A

# FIG. 9B

# FIG. 10

START

CHANGE PAN ANGLE AND/OR TILT ANGLE TO CAPTURE PLURALITY OF IMAGES — S001

EXTRACT FEATURE POINT AND DESCRIBE FEATURE AMOUNT FOR EACH IMAGE — S002

GENERATE COMBINATION OF PLURALITY OF IMAGES AND PERFORM FEATURE POINT MATCHING — S003

EXCLUDE OUTLIER FROM MATCHING LIST — S004

SELECT IMAGE PAIR HAVING HIGH MATCHING DEGREE — S005

ESTIMATE INTERNAL PARAMETER — S006

OBTAIN CORRECTION PARAMETER — S007

END

# FIG. 11

1A

IMAGE CAPTURE DEVICE

14 ARITHMETIC CIRCUIT

15 INPUT DEVICE

16 OUTPUT DEVICE

17 COMMUNICATION CIRCUIT

OPTICAL MECHANISM

111 IMAGING ELEMENT

112 OPTICAL ELEMENT

113 A/D CONVERTER

11

12 DRIVE MECHANISM

13 STORAGE

3

2

CORRECTION DEVICE

21 ARITHMETIC CIRCUIT

22 INPUT DEVICE

23 OUTPUT DEVICE

24 COMMUNICATION CIRCUIT

25 STORAGE

P2 CORRECTION PROGRAM

## INTERNATIONAL SEARCH REPORT

International application No.

**PCT/JP2024/014926**

| A. | CLASSIFICATION OF SUBJECT MATTER |
|---|---|

*H04N 23/60*(2023.01)i
FI: H04N23/60 500

According to International Patent Classification (IPC) or to both national classification and IPC

| B. | FIELDS SEARCHED |
|---|---|

Minimum documentation searched (classification system followed by classification symbols)

H04N23/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | 大久保　英彦　外4名, バーチャルスタジオにおけるカメラキャリブレーション高精度化の考察　A Study on Accurate Camera Calibration Method for Virtual Studio, ＦＩＴ２００７（第６回情報科学技術フォーラム），2007, (OKUBO, Hidehiko et al.) pages 541-542 | 1-3, 5-6 |
| A | | 4 |
| Y | WO 2004/061387 A1 (ARISAWA, Hiroshi) 22 July 2004 (2004-07-22) page 11, line 24 to page 14, line 18, fig. 10-14 | 1-3, 5-6 |
| A | | 4 |
| Y | WO 2022/190224 A1 (NEC CORPORATION) 15 September 2022 (2022-09-15) paragraphs [0002], [0011]-[0090], fig. 1-7 | 5-6 |
| A | | 4 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 May 2024** | **11 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

### INTERNATIONAL SEARCH REPORT
#### Information on patent family members

International application No.

**PCT/JP2024/014926**

| Patent document cited in search report | | | Publication date (day/month/year) | Patent family member(s) | Publication date (day/month/year) |
|---|---|---|---|---|---|
| WO | 2004/061387 | A1 | 22 July 2004 | US 2006/0146142 A1 paragraphs [0092]-[0123], fig. 10-11 | |
| WO | 2022/190224 | A1 | 15 September 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2009017480 A